# FASCICULE DE BREVET EUROPEEN

(11) **EP 3 594 857 B1**
(45) Date de publication et mention de la délivrance du brevet: **06.01.2021**
(21) Numéro de dépôt: 19183886.1
(22) Date de dépôt: 02.07.2019
(51) Int. Cl.: G06K 19/077, B65D 41/00, B65D 51/00

(54) **DISPOSITIF DE FERMETURE MÉTALLISÉ COMPORTANT UN COMPOSANT RFID ET UTILISATION**
METALLISIERTE VERSCHLUSSVORRICHTUNG, DIE EINE RFID-KOMPONENTE UMFASST, UND IHRE VERWENDUNG
METALLISED CLOSING DEVICE COMPRISING AN RFID COMPONENT AND USE THEREOF

(30) Priorité: 13.07.2018 FR 1856469
(43) Date de publication de la demande: 15.01.2020
(73) Titulaire: Les Bouchages Delage, 16130 Gensac la Pallue (FR)
(72) Inventeur: DESLIAS, Olivier, 16200 BOURG CHARENTE (FR); CLERE, Laurent, 16100 COGNAC (FR); DELAGE, Christian, 16100 COGNAC (FR)
(74) Mandataire: Ipside

(56) Documents cités:
- EP-A2- 3 070 023
- WO-A1-2007/065196
- WO-A1-2016/066548
- FR-A1- 3 028 844
- US-A1- 2005 083 203
- US-B1- 7 973 664

## Description

### Domaine de l'invention

La présente invention se rapporte au domaine de l'intégration de composants RFID dans des emballages de produits.

La présente invention concerne plus particulièrement un dispositif de fermeture de récipient comportant une tête présentant une finition extérieure métallisée et un composant RFID, ainsi que son utilisation.

### Etat de la technique

Les composants de radio identification RFID permettent l'intégration de nombreuses fonctions aux emballages produits. L'utilisation la plus simple et répandue est peut être le collage d'étiquettes antivol sur les emballages produits dans les supermarchés désactivés lors du passage en caisse. Les composants RFID sont utilisés également pour faciliter la traçabilité et la logistique de la chaîne de production d'un produit. Par exemple, pour faciliter le suivi des produits aux différentes étapes de la production, de la distribution et pour faciliter les inventaires des stocks produits.

Dans le domaine du vin, les composants RFID ont été proposés pour intégrer des fonctions marketing, comme la mise à disposition d'une fiche technique détaillée sur une bouteille suite à la lecture du composant RFID au moyen d'un dispositif mobile, permettant à une personne de faire un choix d'achat informé et/ou d'obtenir des informations détaillées sur un produit acheté. La combinaison des composants RFID avec des capteurs intelligents permet de faire un suivi de la vie d'une bouteille de vin. Par exemple au moyen d'un capteur de température, il serait possible de déterminer si la bouteille a suivi des conditions de stockage optimales ou si au contraire, elle a été exposée à des variations de températures non conseillées pour la correcte maturation d'un vin.

Les composants RFID ont été également proposés pour permettre l'authentification d'un produit original et le différencier d'une contrefaçon. Par exemple, la demande de brevet internationale No. WO 2016/066548 A1 propose un ensemble de fermeture de bouteille incorporant deux étiquettes d'identification par radiofréquence RFID, l'une des étiquettes étant située dans un logement à l'intérieur de la tête d'un bouchon et la deuxième, sur un suremballage dudit bouchon. Le procédé d'authentification est réalisé à travers la lecture des codes d'identification uniques inscrits sur ces deux étiquettes, et leur vérification dans une base de données comportant les codes attribués audit couple spécifique bouchon/suremballage.

Ledit document, offre une solution satisfaisante pour intégrer un composant RFID à l'intérieur d'un bouchon, et pour la vérification et l'authentification d'un récipient et son contenu. Néanmoins, les matériaux pouvant être utilisés dans la réalisation du bouchon et du suremballage sont limités, les finitions métalliques extérieures sont notamment exclues pour le fonctionnement correct des dispositifs RFID. En effet, la lecture des étiquettes radio fréquence est perturbée par la présence de métaux dans leur environnement.

D'autre part, il est souhaitable d'utiliser des éléments métalliques décoratifs ou des pièces plastiques comportant un revêtement métallisé pour embellir un système de fermeture ou d'emballage, offrant ainsi un aspect luxueux à un produit. Par exemple, une tête de bouchon comportant une surface extérieure métallisée et/ou des gravures métalliques. Il peut être également souhaitable d'intégrer un élément métallique à l'intérieur d'un bouchon ou d'un emballage pour augmenter son poids et la sensation de qualité que l'on associe parfois à ce poids. Le document WO 2007/065196 offre une solution partielle à ce problème. En particulier, il est suggéré de placer un composant RFID sur la surface supérieure d'une fermeture métallisée et de recouvrir ce composant avec un autre matériau. De manière similaire, le brevet français n° FR3 028 844 propose d'intégrer un composant RFID sur la surface extérieure d'une fermeture métallique. Ces solutions sont néanmoins insuffisantes d'un point vu esthétique pour le marché du luxe. Le document US 2005/083203A1 suggère l'utilisation de ferrite pour améliorer la perméabilité de matériaux aux champs magnétiques et la lecture d'un composant RFID. La demande de brevet EP3070023 A2 suggère l'intégration d'un composant RFID à l'intérieur d'une fermeture de bouteille non métallisée et le brevet américain n° US7973664 B1 donne un exemple de comment intégrer un composant RFID dans un film d'étanchéité comportant l'aluminium pour obturer des récipients alimentaires, ce film étant recouvert ensuite par une enveloppe. Néanmoins, aucun de ces documents ne donne une solution pour intégrer un composant RFID à l'intérieur d'une enveloppe ayant une surface extérieure métallisée.

### Exposé de l'invention

La présente invention a pour but un dispositif de fermeture de récipient comportant un composant RFID pouvant être lu sans perturbation de l'environnement métallique apporté par ledit dispositif de fermeture.

À cette fin, l'invention propose un dispositif de fermeture de récipient de type bouchon comportant dans sa partie inférieure un corps obturateur et dans sa partie supérieure une tête, ladite tête comportant un composant RFID se présentant sous la forme d'un insert, une enveloppe comportant une surface extérieure et une surface intérieure, et un lest à l'intérieur de l'enveloppe. En outre, le dispositif de fermeture comporte les caractéristiques suivantes :
- la surface extérieure de l'enveloppe est au moins partiellement métallisée;
- l'insert est positionné à l'intérieur de l'enveloppe sensiblement centré sur un plan radial de la tête ;
- le lest est séparé de l'insert par au moins un espace vide aménagé à l'intérieur de la tête.

Le lest selon l'invention sert en outre à apporter du poids ou un support structurel au dispositif de fermeture, ce lest pouvant être réalisé en matériau métallique pleine masse, en matière plastique densifiée par charges minérales ou métalliques et/ou tout autre matériau non métallique.

Dans un mode de réalisation, l'insert est positionné sur la surface intérieure de l'enveloppe, dépourvue de métallisation au moins à l'emplacement de l'insert, ladite surface intérieure de l'enveloppe étant situé du côté supérieur ou du côté inférieur de la tête du dispositif de fermeture.

Dans l'invention, un espace est aménagé entre le lest et l'insert afin de réduire les perturbations de l'antenne du composant RFID tout en limitant l'espace sacrifié à l'intérieur de la tête du dispositif de fermeture. Dans un mode de réalisation, le lest est aménagé en continuité de l'insert à l'intérieur de l'enveloppe, et l'au moins un espace vide entre le lest et l'insert est déterminé par un évidement et/ou une concavité sur une face du lest hébergeant l'insert.

Le lest du dispositif de l'invention peut comporter également toutes ou partie des caractéristiques suivantes considérées isolément ou en toute combinaison techniquement opérable :
- un corps du lest comporte une rainure et/ou un trou traversant l'épaisseur du corps dudit lest ;
- le corps du lest possède une forme de disque comportant des parois s'étendant sensiblement verticales à partir d'un périmètre du disque, de manière à définir une face concave du lest et;
- le trou du lest traverse dans un plan vertical et central l'épaisseur du corps dudit lest ;
- la rainure s'étend depuis le trou jusqu'au périmètre extérieur du corps du lest ;
- le lest est disposé horizontalement à l'intérieur de l'enveloppe de la tête.
- le corps du lest en forme de disque comporte une entaille, s'étendant du périmètre externe du disque à un point intermédiaire entre le trou et ledit périmètre externe, et/ou le lest comporte un évidemment circulaire entourant le trou central.

Ces caractéristiques permettent avantageusement de limiter l'absorption du signal radio par un lest métallique, ainsi que de limiter la perturbation de l'antenne, voire de l'améliorer.

Avantageusement, il sera également possible d'améliorer la lecture/émission du composant RFID par l'addition d'une couche de matériau limitant les interférences magnétiques disposée sur l'insert, et/ou sur le lest. Cette couche peut par exemple être réalisée en ferrite. Bien entendu, l'insert selon l'invention comporte un tag et une antenne, et ledit insert est complexé par deux couches d'au moins 100 µm de matériau polymère tel que du PET.

Avantageusement, l'antenne utilisée comporte un diamètre de 9 à 15 mm, ou de côtés de 14,5 mm pour une antenne carrée. Dans un mode de réalisation, l'antenne est imprimée sur une face supérieure et sur une face inférieure pour améliorer sa performance.

L'invention concerne également l'utilisation du dispositif de fermeture de l'invention, pour intégrer à un emballage une fonction RFID de traçabilité, de logistique, de mise à disposition d'information, d'authentification et/ou de suivi de vie d'un produit au moyen d'un capteur intelligent.

### Brève description des dessins

On comprendra mieux l'invention à l'aide de la description, faite ci-après à titre purement explicatif, des modes de réalisation de l'invention, en référence aux figures dans lesquelles :
- La Figure 1 représente schématiquement une vue latérale d'un dispositif de fermeture selon l'invention.
- La Figure 2 illustre une représentation schématique d'une vue latérale d'une section longitudinale d'un mode de réalisation du dispositif de fermeture selon l'invention.
- La figure 3 illustre une vue en perspective d'un mode de réalisation d'un lest selon l'invention.
- La figure 4 illustre une représentation schématique d'un autre mode de réalisation d'un lest selon l'invention.
- La figure 5 illustre une représentation schématique d'un autre mode de réalisation d'un lest selon l'invention.
- La figure 6 représente schématiquement une vue latérale d'un dispositif de fermeture selon un autre mode de réalisation de l'invention.

### Description détaillée de modes de réalisation de l'invention

Pour les besoins de la description, il sera considéré un sens supérieur et un sens inférieur suivant un axe vertical Z du dispositif de fermeture de l'invention, le sens supérieur pointant vers la tête du dispositif de fermeture et le sens inférieur pointant vers le corps obturateur. Les différents éléments du dispositif de fermeture devront être également interprétés selon ces repères, en particulier lors de leur position sur celle-ci, y compris lorsqu'ils seront décrits isolément.

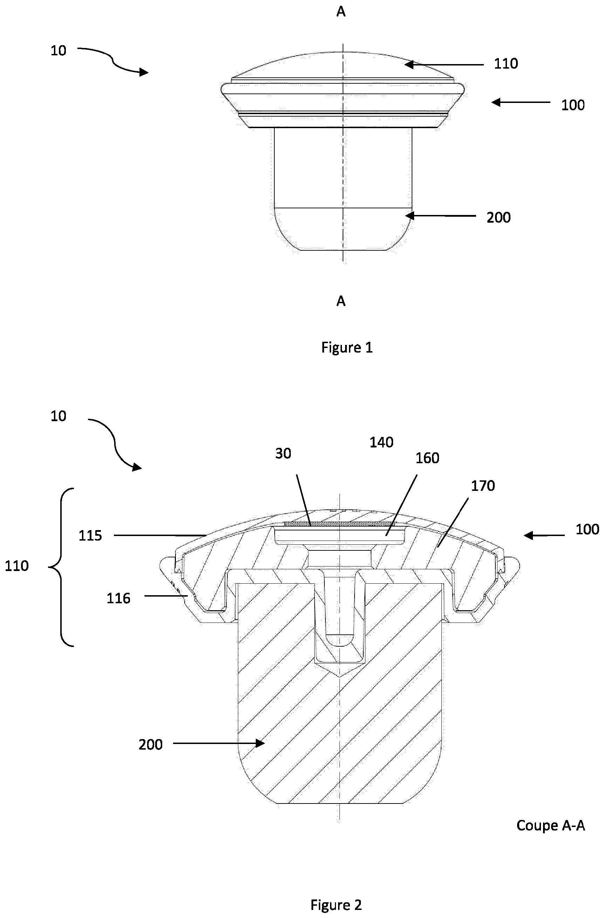

La figure 1 montre un exemple d'un dispositif de fermeture selon un mode de réalisation de l'invention. Ce dispositif de fermeture 10 de type bouchon comporte une tête 100 et un corps obturateur 200 destiné à fermer par insertion l'ouverture d'un col d'un récipient, tel que le col d'une bouteille. Le corps obturateur est typiquement réalisé en liège, ou dans d'autres matériaux plastiques de substitution présentant une certaine flexibilité.

La tête 100 permet de manœuvrer la fermeture pour la tirer et l'insérer dans le col d'un récipient, ainsi que d'offrir un dessin esthétique à la portion supérieure dudit dispositif de fermeture.

La tête 100 comporte une enveloppe 110 intégrant les éléments esthétiques du bouchon, ladite enveloppe comportant une surface extérieure décorée et une surface intérieure. Notamment, dans la présente invention, la surface extérieure de l'enveloppe de la tête est métallisée, par exemple par l'application d'un revêtement métallique sur une enveloppe plastique.

La figure 2 illustre schématiquement une section du dispositif de fermeture de la figure 1 suivant la coupe A-A selon un premier mode de réalisation de l'invention. Comme il est montré sur la figure, l'enveloppe 110 comporte une partie supérieure 115 et une partie inférieure 116 assemblées par clipsage, et formant une coque à l'intérieure de laquelle se trouve une structure de support 170 agissant comme support structural pour l'enveloppe 110 et comportant un emplacement pour aménager un lest 160 à l'intérieur de l'enveloppe 110 dans une position prédéfinie.

Le dispositif de fermeture de l'invention comporte en particulier un dispositif ou composant d'identification par radiofréquence (RFID). Le composant RFID comporte une puce, au-dessous de laquelle se trouve une antenne, ledit composant RFID se présentant sous la forme d'un insert 30 ou « inlay » en anglais, complexé par deux couches additionnelles de protection en matériau polymère tel que du PET.

Chaque couche additionnelle de protection présente une épaisseur minimale de 100 µm et permet de rigidifier le composant pour le protéger et faciliter son intégration à la fermeture lors du processus de fabrication, ainsi que limiter les migrations des composés constitutifs du composant électronique vers le produit à l'intérieur du récipient à fermer. L'insert 30 peut être intégré à la tête de fermeture par différents procédés, par exemple par collage ou surmoulage.

Selon un mode de réalisation préféré de l'invention, on choisit une antenne de petites dimensions, par exemple d'un diamètre de 9 mm, et de 12 à 14 mm, ou une antenne carrée de 14.5 mm de côté. Avantageusement, l'antenne de l'insert est gravée ou imprimée sur une face supérieure et sur une face inférieure pour optimiser la performance RFID.

Comme il a été déjà mentionné, la surface extérieure métallisée de l'enveloppe perturbe la lecture de l'étiquette de radio-identification. En effet, cet environnement métallique entourant le composant RFID crée un effet type cage de Faraday, atténuant la réception et la transmission d'ondes radio par l'antenne du composant RFID.

Or, la Demanderesse a trouvé de manière surprenante que le positionnement de l'insert à l'intérieur de la tête du dispositif de fermeture influence significativement les performances de sa lecture. Pour améliorer la performance de l'insert, celui-ci est positionné sensiblement centré sur un plan radial de la tête, et un espace vide est aménagé entre l'antenne et le lest à l'intérieur de la tête 100 du dispositif de fermeture 10.

Selon le mode de réalisation illustré sur la figure 2, l'insert 30 est positionné centré sur une surface intérieure de l'enveloppe 110 du côté supérieur de la tête 100, et le lest 160 est positionné en dessous de l'insert. Dans ce mode de réalisation, l'espace vide aménagé entre l'insert et le lest est déterminé par une concavité sur la face du lest 160 en continuité avec l'insert, permettant ainsi au lest d'être situé en dessous de l'insert mais sans être en contact direct avec celui-ci.

Dans la présente invention, on entend par lest un corps présent à l'intérieur de l'enveloppe de tête servant à augmenter le poids du bouchon. Ledit lest peut être réalisé en matériau métallique pleine masse, en matière plastique densifiée par charges minérales ou métalliques et/ou tout autre matériau non métallique.

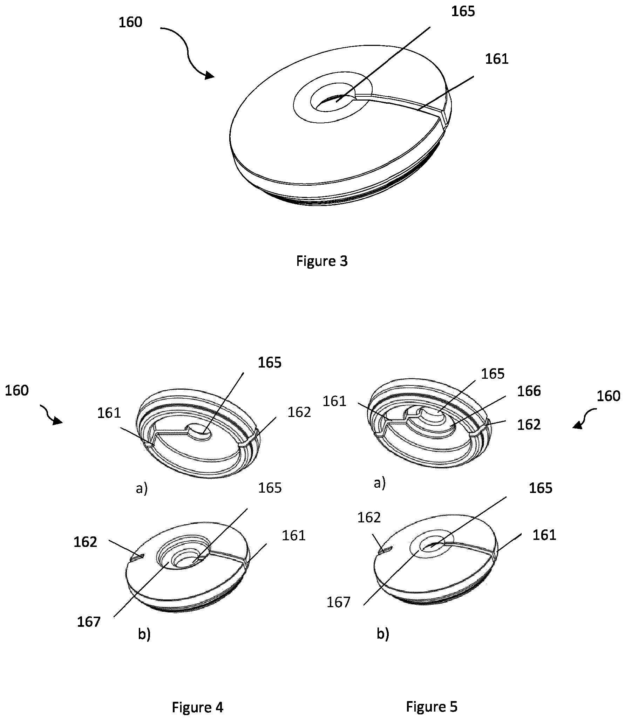

La figure 3 illustre un mode de réalisation du lest dans lequel le lest 160 est réalisé en matériau métallique pleine masse, et dans lequel le lest présente un corps de disque qui est disposé horizontalement à l'intérieur de la tête. Ce corps métallique pleine masse permet d'apporter du poids à la tête de la fermeture. Toutefois, il apporte également des perturbations électromagnétiques importantes au fonctionnement du composant RFID. Avantageusement, ces perturbations sont atténuées par l'adaptation d'une rainure 161 et un trou 165 cylindrique de matière traversant le corps du disque du lest. Ledit trou 165 est de préférence situé centré sur le disque traversant dans un plan vertical l'épaisseur dudit disque, et la rainure 161 s'étend à partir d'un point situé sur le périmètre extérieur du disque 162 jusqu'au trou 165 central dudit lest.

Les figures 4 et 5 montrent d'autres modes de réalisation du lest 160 permettant avantageusement d'améliorer les performances du composant RFID dans cet environnement métallique. La forme du lest illustrée sur ces figures rappelle un bouchon rond comportant des parois sensiblement verticales et filetés de son côté externe. Selon ces modes de réalisation, le lest comporte une entaille 162 en plus de la rainure 161 et le trou 165 central déjà décrits. Comme il est illustré sur les figures 4 et 5, l'entaille 162 est de préférence située du côté opposé à la rainure 161, ladite entaille 162 s'étendant depuis le périmètre externe du lest 160 jusqu'à un point intermédiaire entre le trou 165 central et ledit périmètre externe.

Les détails a) des figures 4 et 5 montrent une face concave du lest comportant la cavité ou l'évidemment permettant au lest d'être positionné en continuité de l'insert, ladite concavité étant définie par la présence des parois sensiblement verticales s'étendant à partir du périmètre externe d'un disque. Comme il est montré sur les figures, les parois verticales du lest diminuent en diamètre progressivement et forment des sections droites de diamètre constant, intercalées à des sections inclinées diminuant le diamètre externe des parois. En particulier, sur le mode de réalisation de la figure 5, la face concave comporte un évidemment circulaire 166 entourant le trou 165 central. Vue depuis la face concave, la première rainure 161 prend ainsi une forme d'escalier dans le mode de réalisation illustré à la figure 5 et une forme générale de L dans le mode de réalisation de la figure 4.

Les détails b) des figures 4 et 5 montrent une face dite convexe du lest, opposée à la face concave, ladite face étant appelée face convexe pour faciliter la description de l'invention, néanmoins cette face peut être plate ou sensiblement plate sans pour cela sortir du cadre de l'invention. Comme il est montré sur les figures, la face convexe du lest comporte également un évidemment circulaire 167 entourant le trou 165 central, ledit évidemment circulaire 167 étant plus prononcé dans le mode de réalisation illustré à la figure 4.

Les caractéristiques géométriques de ces modes de réalisation du lest, possèdent un effet sur les performances du composant RFID, et permettent notamment d'améliorer ladite performance. Selon l'invention, les modes de réalisations et variantes du lest décrites ci dessus peuvent être combinées entre elles.

Dans un autre mode de réalisation, le lest est réalisé dans un matériau plastique densifié ou en zamak (un alliage de zinc, d'aluminium et de magnésium) remplissant la quasi-totalité du volume interne de l'enveloppe de la tête, outre l'évidement aménagé pour garder un espace entre la surface supérieure du lest et l'insert, et la portion de la tête enfoncée dans le corps obturateur pour maintenir ces deux parties ensemble. Dans ce mode de réalisation, le lest peut prendre par exemple la forme du support 170.

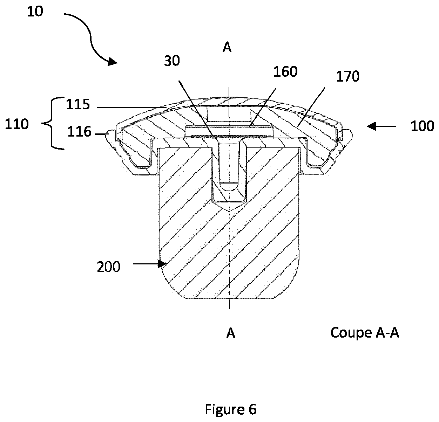

La figure 6 illustre un autre mode de réalisation du dispositif de fermeture de l'invention, dans lequel l'insert 30 est positionné sensiblement centré sur un plan radial de la tête, notamment sur la surface interne de l'enveloppe 110 situé du côté inférieur de la tête. Le lest 160, réalisé par exemple selon l'un des modes illustrés aux figures 4 et 5, est positionné dans un plan horizontal sous l'insert, avec sa face concave orientée vers l'insert de manière à maintenir un espace vide entre l'insert 30 et le lest 160. Le lest possède donc des dimensions permettant d'héberger l'insert dans sa face concave sans rentrer en contact avec ledit insert. De manière inattendue, ce mode de réalisation permet d'amplifier significativement les performances de lecture du composant RFID de l'insert, augmentant sa distance de lecture efficace.

Dans un autre mode de réalisation (non illustré), l'insert 30 est positionné centré sur un plan radial de la tête, dans une position intermédiaire entre le côté supérieur et le côté inférieur de l'enveloppe 110, et le lest comporte un trou central possédant des dimensions supérieures aux dimensions de l'insert 30.

Dans un mode de réalisation, la performance du composant RFID est améliorée par l'ajout d'une couche de matériau limitant les interférences électromagnétiques, soit directement sur l'insert 30, ou préférablement positionnée sur le lest 160 (non illustré). Cette couche peut par exemple être réalisée en ferrite permettant de réduire le bruit électromagnétique de l'environnement de l'insert, améliorant ainsi l'interaction du composant RFID avec un lecteur externe.

L'invention permet ainsi d'intégrer à un dispositif de fermeture d'aspect luxueux, un composant RFID permettant d'intégrer de nouvelles fonctions à l'emballage d'un produit, par exemple des fonctions de traçabilité, de logistique, de gestion d'inventaire, de suivi de vie d'un produit, d'authentification etc.

L'invention est décrite dans ce qui précède à titre d'exemple. Il est entendu que l'homme du métier est à même de réaliser différentes variantes de l'invention sans pour autant sortir du cadre du brevet défini par les revendications.

## Revendications

1. Dispositif de fermeture (10) de récipient de type bouchon comportant dans sa partie inférieure un corps obturateur (200), et dans sa partie supérieure une tête (100), ladite tête comportant un composant RFID se présentant sous la forme d'un insert (30), une enveloppe (110) comportant une surface extérieure et une surface intérieure, et un lest (160) à l'intérieur de l'enveloppe (110), ledit dispositif de fermeture étant **caractérisé en ce que** :
- la surface extérieure de l'enveloppe (110) est au moins partiellement métallisée ;
- l'insert (30) est positionné à l'intérieur de l'enveloppe (110) sensiblement centré sur un plan radial de la tête (100) ;
- le leste (160) est séparé de l'insert (30) par au moins un espace vide aménagé à l'intérieur de la tête (100).

2. Dispositif de fermeture de récipient selon la revendication 1, dans lequel le lest (160) est réalisé en matériau métallique pleine masse, en matière plastique densifiée par charges minérales ou métalliques et/ou tout autre matériau non métallique.

3. Dispositif de fermeture de récipient selon l'une des revendications précédentes, dans lequel l'insert est positionné sur la surface intérieure de l'enveloppe (110), dépourvue de métallisation au moins à l'emplacement de l'insert (30), ladite surface intérieure de l'enveloppe étant situé du côté supérieur ou du côté inférieur de la tête du dispositif de fermeture.

4. Dispositif de fermeture de récipient selon l'une des revendications précédentes, dans lequel le lest est aménagé en continuité de l'insert (30) à l'intérieur de l'enveloppe (110), et l'au moins un espace vide entre le lest (160) et l'insert (30) est déterminé par un évidement et/ou une concavité sur une face du lest hébergeant l'insert (30).

5. Dispositif de fermeture de récipient selon l'une des revendications précédentes, dans laquelle un corps du lest comporte une rainure (161) et/ou un trou (165) traversant l'épaisseur du corps dudit lest (160).

6. Dispositif de fermeture de récipient selon la revendication 5, dans lequel le corps du lest possède une forme de disque comportant des parois s'étendant sensiblement verticales à partir d'un périmètre du disque, de manière à définir une face concave du lest, et dans lequel :
- le trou (165) du lest traverse dans un plan vertical et central l'épaisseur du corps dudit lest,
- la rainure (161) s'étend depuis le trou (165) jusqu'au périmètre extérieur du corps du lest (160), et
- le lest (160) est disposé horizontalement à l'intérieur de l'enveloppe (110) de la tête.

7. Dispositif de fermeture de récipient selon l'une des revendications 5 ou 6, dans lequel le corps du lest en forme de disque comporte une entaille (162), s'étendant du périmètre externe du disque à un point intermédiaire entre le trou (165) et ledit périmètre externe, et/ou le lest comporte un évidemment circulaire (166) entourant le trou central.

8. Dispositif de fermeture de récipient selon l'une des revendications précédentes, dans lequel une couche de matériau limitant les interférences magnétiques est disposée sur l'insert (30), et/ou sur le lest (160).

9. Dispositif de fermeture de récipient selon l'une des revendications précédentes, dans lequel l'insert comporte un tag et une antenne, et dans laquelle l'insert est complexé par au moins deux couches d'au moins 100 µm de matériau polymère tel que du PET.

10. Dispositif de fermeture de récipient selon l'une des revendications précédentes, dans lequel l'antenne comporte un diamètre de 9 à 15 mm, ou comporte des côtés de 14.5 mm pour une antenne carrée.

11. Dispositif de fermeture de récipient selon l'une des revendications précédentes, dans lequel l'antenne est imprimée sur une face supérieure et sur une face inférieure.

## Patentansprüche

1. Verschlussvorrichtung (10) für einen Behälter, vom Typ Stopfen, welche in ihrem unteren Teil einen Schließkörper (200), und in ihrem oberen Teil einen Kopf (100) beinhaltet, wobei der Kopf eine RFID-Komponente beinhaltet, welche sich in der Form eines Einsatzes (30) darstellt, eine Hülle (110), welche eine Außenoberfläche und eine Innenoberfläche beinhaltet, und einen Ballast (160) im Inneren der Hülle (110), wobei die Verschlussvorrichtung **dadurch gekennzeichnet ist, dass:**
- die Außenoberfläche der Hülle (110) mindestens teilweise metallisiert ist;
- der Einsatz (30) im Inneren der Hülle (110), im Wesentlichen in einer radialen Ebene des Kopfes (100) zentriert, positioniert ist;
- der Ballast (160) durch mindestens einen leeren Raum, der im Inneren des Kopfes (100) eingerichtet ist, vom Einsatz (30) getrennt ist.

2. Verschlussvorrichtung für einen Behälter nach Anspruch 1, wobei der Ballast (160) aus einem durchgehenden metallischen Werkstoff, aus mit mineralischen oder metallischen Füllstoffen verdichtetem Kunststoffmaterial und/ oder jedem anderen nicht metallischen Werkstoff gefertigt ist.

3. Verschlussvorrichtung für einen Behälter nach einem der vorstehenden Ansprüche, wobei der Einsatz auf der Innenoberfläche der Hülle (110) positioniert ist, die mindestens an der Stelle des Einsatzes (30) mit keiner Metallisierung versehen ist, wobei die Innenoberfläche der Hülle auf der oberen Seite oder der unteren Seite des Kopfes der Verschlussvorrichtung gelegen ist.

4. Verschlussvorrichtung für einen Behälter nach einem der vorstehenden Ansprüche, wobei der Ballast in Fortführung des Einsatzes (30) im Inneren der Hülle (110) eingerichtet ist, und der mindestens eine leere Raum zwischen dem Ballast (160) und dem Einsatz (30) durch eine Aussparung und/ oder eine Konkavität auf einer Fläche des Ballastes festgelegt ist, die den Einsatz (30) beherbergt.

5. Verschlussvorrichtung für einen Behälter nach einem der vorstehenden Ansprüche, wobei ein Körper des Ballastes eine Nut (161) und/ oder ein Loch (165) beinhaltet, welches die Dicke des Körpers des Ballastes (160) durchquert.

6. Verschlussvorrichtung für einen Behälter nach Anspruch 5, wobei der Körper des Ballastes eine Scheibenform besitzt, welche Wände beinhaltet, die sich im Wesentlichen vertikal aus einem Umfang der Scheibe erstrecken, um eine konkave Fläche des Ballastes zu definieren, und wobei:
- das Loch (165) des Ballastes in einer vertikalen und zentralen Ebene die Dicke des Körpers des Ballastes durchquert,
- sich die Nut (161) aus dem Loch (165) bis zum äußeren Umfang des Körpers des Ballastes (160) erstreckt, und
- der Ballast (160) horizontal im Inneren der Hülle (110) des Kopfes angeordnet ist.

7. Verschlussvorrichtung für einen Behälter nach einem der Ansprüche 5 oder 6, wobei der Körper des Ballastes in Scheibenform einen Einschnitt (162) beinhaltet, der sich vom äußeren Umfang der Scheibe an einem zwischenliegenden Punkt zwischen dem Loch (165) und dem äußeren Umfang erstreckt, und/ oder der Ballast eine kreisförmige Aussparung (166) beinhaltet, welche das zentrale Loch umgibt.

8. Verschlussvorrichtung für einen Behälter nach einem der vorstehenden Ansprüche, wobei eine Materialschicht, welche die magnetischen Störungen begrenzt, an dem Einsatz (30) und/ oder an dem Ballast (160) angeordnet ist.

9. Verschlussvorrichtung für einen Behälter nach einem der vorstehenden Ansprüche, wobei der Einsatz ein Etikett und eine Antenne beinhaltet, und wobei der Einsatz durch mindestens zwei Schichten von mindestens 100 µm an Polymermaterial, wie PET, komplexiert ist.

10. Verschlussvorrichtung für einen Behälter nach einem der vorstehenden Ansprüche, wobei die Antenne einen Durchmesser von 9 bis 15 mm beinhaltet, oder bei einer quadratischen Antenne Seiten von 14,5 mm beinhaltet.

11. Verschlussvorrichtung für einen Behälter nach einem der vorstehenden Ansprüche, wobei die Antenne auf eine obere Fläche und auf eine untere Fläche gedruckt ist.

## Claims

1. Container closing device (10)of the stopper kind including in the lower portion thereof a sealing body (200), and in the upper portion thereof a head (100), said head including an RFID component presented in the form of an insert (30), a shell (110) including an outer surface and an inner surface, and a ballast (160) inside the shell (110), said closing device being **characterised in that:**
- the outer surface of the shell (110) is at least partially metallised;
- the insert (30) is positioned inside the shell (110) substantially centred on a radial plane of the head (100);
- the ballast (160) is separated from the insert (30) by at least one empty space arranged inside the head (100).

2. Container closing device according to claim 1, wherein the ballast (160) is made of full-body metallic material, of plastic material densified by mineral or metallic fillers and/or any other non-metallic material.

3. Container closing device according to one of the preceding claims, wherein the insert is positioned on the inner surface of the shell (110), devoid of metallisation at least at the location of the insert (30), said inner surface of the shell being located on the upper side or the lower side of the head of the closing device.

4. Container closing device according to one of the preceding claims, wherein the ballast is arranged in continuity from the insert (30) inside the shell (110), and the at least one empty gap between the ballast (160) and the insert (30) is defined by a recess and/or a concavity on a face of the ballast accommodating the insert (30).

5. Container closing device according to one of the preceding claims, wherein a body of the ballast includes a groove (161) and/or a hole (165) traversing the thickness of the body of said ballast (160).

6. Container closing device according to claim 5, wherein the body of the ballast has a disk shape including walls externally substantially vertical from a perimeter of a disk, so as to define a concave face of the ballast, and wherein:
- the hole (165) of the ballast traverses in a vertical and central plane the thickness of the body of said ballast,
- the groove (161) extends from the hole (165) to the outer perimeter of the body of the ballast (160), and
- the ballast (160) is disposed horizontally inside the shell (110) of the head.

7. Container closing device according to one of claims 5 to 6, wherein the body of the ballast in the shape of a disk includes a notch (162), extending from the outer perimeter of the disk to an intermediate bridge between the hole (165) and said outer perimeter, and/or the ballast includes a circular recess (166) surrounding the central hole.

8. Container closing device according to one of the preceding claims, wherein a layer of material limiting magnetic interferences is disposed on the insert (30), and/or on the ballast (160).

9. Container closing device according to one of the preceding claims, wherein the insert includes a tag and an antenna, and wherein the insert is complexed with at least two layers of at least 100 m of polymer material such as PET.

10. Container closing device according to one of the preceding claims, wherein the antenna includes a diameter of 9 to 15 mm, or includes sides of 14.5 mm for a square antenna.

11. Container closing device according to one of the preceding claims, wherein the antenna is printed on a top face and on a bottom face.
